Europäisches Patentamt

European Patent Office

Office européen des brevets

(19)

(11) **EP 1 347 897 B1**

(12) **EUROPÄISCHE PATENTSCHRIFT**

(45) Veröffentlichungstag und Bekanntmachung des Hinweises auf die Patenterteilung:
**25.05.2005 Patentblatt 2005/21**

(51) Int Cl.⁷: **B60T 8/00**

(21) Anmeldenummer: **01271808.6**

(22) Anmeldetag: **18.12.2001**

(86) Internationale Anmeldenummer:
**PCT/DE2001/004736**

(87) Internationale Veröffentlichungsnummer:
**WO 2002/051681 (04.07.2002 Gazette 2002/27)**

(54) **ANORDNUNG UND VERFAHREN ZUM ÜBERWACHEN DES FAHRZUSTANDS EINES FAHRZEUGS**

ASSEMBLY AND METHOD FOR MONITORING THE DRIVING CONDITION OF A VEHICLE

DISPOSITIF ET PROCEDE POUR SURVEILLER L'ETAT DE MARCHE D'UN VEHICULE

(84) Benannte Vertragsstaaten:
**DE FR GB**

(30) Priorität: **23.12.2000 DE 10065011**

(43) Veröffentlichungstag der Anmeldung:
**01.10.2003 Patentblatt 2003/40**

(73) Patentinhaber: **ROBERT BOSCH GMBH**
**70442 Stuttgart (DE)**

(72) Erfinder:
• **LANDESFEIND, Klaus**
**71522 Backnang (DE)**
• **BRAUN, Thomas**
**71711 Murr (DE)**

(56) Entgegenhaltungen:
**EP-A- 0 348 634**      **EP-A- 0 706 905**
**DE-A- 4 419 650**      **DE-A- 19 909 948**
**DE-U- 9 106 642**      **US-A- 5 717 590**

EP 1 347 897 B1

## Beschreibung

Die Erfindung betrifft eine Anordnung zum Überwachen des Fahrzustands eines Fahrzeugs mit Mitteln zum Erzeugen eines Lenkwinkelsignals und Mitteln zum Erzeugen eines Querbeschleunigungssignals. Die Erfindung betrifft ferner ein Verfahren zum Überwachen des Fahrzustands eines Fahrzeugs mit den Schritten: Erzeugen eines Lenkwinkelsignals und Erzeugen eines Querbeschleunigungssignals.

## Stand der Technik

Aus der EP 0 348 634 A2 ist eine Regelungseinrichtung zur Wankstabilisierung eines Fahrzeugs bekannt. Diese Regelungseinrichtung ist nur beim Überschreiten von Schwellwerten für die Querbeschleunigung des Fahrzeugs und für den Lenkraddrehwinkel aktiviert. Bei aktivierter Regelungseinrichtung erzeugen Stellglieder ein Wankbewegungen entgegenwirkendes Wankmoment am Fahrzeugaufbau.

Die Merkmale der Oberbegriffe der unabhängigen Ansprüche sind der EP 0 348 634 A2 entnommen.

Gattungsgemäße Anordnungen und gattungsgemäße Verfahren werden in zahlreichen Modifikationen für die Überwachung, Steuerung und Regelung des Fahrverhaltens von Kraftfahrzeugen verwendet.

Beispielsweise kennt man das System FDR (Fahrdynamikregelung) als aktives Fahrsicherheitssystem. Die FDR gibt dem Fahrer verbesserte Grundfunktionen im Hinblick auf ABS (Antiblockiersystem) und ASR (Antischlupfregelung), und ferner hilft die FDR dem Fahrer in kritischen Fahrsituationen: Diese kritischen Situationen beziehen sich nicht nur auf längsdynamisch kritische Situationen, beispielsweise Vollbremsungen oder Beschleunigungen, sondern auch auf querdynamisch kritische Situationen, beispielsweise das Schleudern des Fahrzeugs.

Für die Stabilisierung der Querdynamik des Fahrzeugs ist insbesondere das Drehratensignal von zentraler Bedeutung. Der Signalverlauf des Drehratensignals und Modellgrößen werden daher von verschiedenen Überwachungen überprüft. Eine sehr schnelle und direkte Signalüberwachung stellt beispielsweise die Gradientenüberwachung dar. Hierbei wird die Änderung des Drehratensignals innerhalb eines bestimmten Zeitfensters betrachtet. Liegt eine Änderung vor, die größer ist als ein vorgegebener Schwellenwert, so wird hieraus geschlossen, dass ein Fehler vorliegt. Dies kann beispielsweise dazu führen, dass die FDR in die Fahrdynamik eingreift.

Allerdings ist es erwünscht, dass extreme gewollte Fahrmanöver oder bestimmte Fahrbahnverhältnisse nicht zu der Erkennung eines Fehlers führen. Daher ist man grundsätzlich gezwungen, die Schwelle, ab der ein Fehler erkannt wird, hinreichend hoch anzusetzen. Dies hat aber wiederum den Nachteil, dass in Situationen, welche tatsächlich signaltechnisch kritisch sind, eine gewollte Abschaltung mitunter ausbleibt.

## Vorteile der Erfindung

Die Erfindung überwindet diesen Nachteil durch das Vorsehen der Anordnung nach Anspruch 1 und das Verfahren nach Anspruch 8, wobei Mittel zum Vergleichen eines aus dem Lenkwinkelsignal abgeleiteten Signal mit einem maximalen Lenkwinkelsignal vorgesehen sind, dass Mittel zum Vergleichen eines aus dem Querbeschleunigungssignal abgeleiteten Signal mit einem maximalen Querbeschleunigungssignal vorgesehen sind und dass aus den Vergleichen eine den Fahrzustand des Fahrzeugs beschreibende Größe ableitbar ist. Auf diese Weise ist es möglich, den Fahrzustand über eine variable Schwelle zu überwachen. Es ist möglich, die Fehlerschwelle umso höher zu legen, je dynamischer gefahren wird. Man vermeidet daher bei dynamischer Fahrweise einen Eingriff in die Fahrdynamik. Andererseits kann eine kritische Schwelle zur Verfügung gestellt werden, um bei kritischen Situationen zuverlässig eine Fahrdynamikregelung vorzunehmen.

Es ist vorgesehen, dass das Lenkwinkelsignal und das Querbeschleunigungssignal jeweils einem Tiefpassfilter zuführbar sind, wobei von den Tiefpassfiltern ein gefiltertes Lenkwinkelsignal und ein gefiltertes Querbeschleunigungssignal ausgegeben werden, dass Mittel zum Bilden des Betrags der Differenz zwischen dem Lenkwinkelsignal und dem gefilterten Lenkwinkelsignal vorgesehen sind, dass Mittel zum Bilden des Betrags der Differenz zwischen dem Querbeschleunigungssignal und dem gefilterten Querbeschleunigungssignal vorgesehen sind und dass aus dem Beträgen eine den Fahrzustand des Fahrzeugs beschreibende Größe ableitbar ist. Die genannten Differenzsignale zwischen den Rohsignalen und den tiefpassgefilterten Signalen eignen sich besonders für eine sensible Überwachung des Fahrzustands des Fahrzeugs.

Besonders bevorzugt ist es, wenn der Betrag aus der Differenz zwischen dem Lenkwinkelsignäl und dem gefilterten Lenkwinkelsignal auf das maximale Lenkwinkelsignal normiert wird und wenn der Betrag aus der Differenz zwischen dem Querbeschleunigungssignal und dem gefilterten Querbeschleunigungssignal auf das maximale Querbeschleunigungssignal normiert wird und wenn ferner aus den normierten Beträgen eine den Fahrzustand des Fahrzeugs beschreibende Größe ableitbar ist. Diese normierten Beträge können zwischen 0 und 100% liegen, wobei vorzugsweise 0% einem stationären Fahrzustand entspricht und 100% einem instationären Fahrzustand. Die normierten Größen können dann weitergehend zur Bestimmung der den Fahrzustand des Fahrzeugs beschreibenden Größe verarbeitet werden.

Es ist vorteilhaft, dass aus dem Maximum der normierten Beträge eine den Fahrzustand des Fahrzeugs beschreibende Größe ableitbar ist. Somit werden sowohl das Verhalten des Lenkwinkels als auch das Verhalten der Querbeschleunigung berücksichtigt.

Es ist von besonderem Vorteil, dass der Betrag aus der Differenz zwischen dem Lenkwinkelsignal und dem gefilterten Lenkwinkelsignal mit dem maximalen Lenkwinkelsignal verglichen wird und dass dem normierten Betrag aus der Differenz zwischen dem Lenkwinkelsignal und dem gefilterten Lenkwinkelsignal ein Wert von 100% zugewiesen wird, wenn der Betrag aus der Differenz zwischen dem Lenkwinkelsignal und dem gefilterten Lenkwinkelsignal größer oder gleich dem maximalen Lenkwinkelsignal ist. Insofern kann eine Größe zur Verfügung gestellt werden, welche für sämtliche Fahrsituationen zwischen 0% und 100% liegt, wobei 100% alle Fahrzustände erfasst, die mit einem Lenkwinkelsignal oberhalb des maximalen Lenkwinkelsignals einhergehen.

In vergleichbarer Weise ist es vorteilhaft, dass der Betrag aus der Differenz zwischen dem Querbeschleunigungssignal und dem gefilterten Querbeschleunigungssignal mit dem maximalen Querbeschleunigungssignal verglichen wird und dass dem normierten Betrag aus der Differenz zwischen dem Querbeschleunigungssignal und dem gefilterten Querbeschleunigungssignal ein Wert von 100% zugewiesen wird, wenn der Betrag aus der Differenz zwischen dem Querbeschleunigungssignal gefilterten Querbeschleunigungssignal größer oder gleich dem maximalen Querbeschleunigungssignal ist. Damit bestehen im Hinblick auf den Wertebereich des Querbeschleunigungssignals vergleichbare Verhältnisse wie beim Wertebereich des Lenkwinkelsignals. Die beiden normierten Signale haben als minimalen Wert 0%, wobei dieser Wert bei einem digitalen Wertebereich zwischen 0 und 255 dann zugewiesen wird, wenn der Betrag aus den jeweiligen Differenzen kleiner 2 Bit ist.

Es ist bevorzugt, dass eine Veränderung des Fahrzustands zu instationärem Fahrzustand direkt in die den Fahrzustand beschreibende Größe übernommen wird. Ist in einem aktuellen Abfragezyklus die Größe, welche dem Fahrzustand entspricht, kleiner als die Größe des Fahrzustands im vorangehenden Zyklus, so wird als Größe für den Fahrzustand die Größe des aktuellen Fahrzustands übernommen.

Es ist allerdings bevorzugt, dass eine Veränderung des Fahrzustandes zu stationärem Fahrzustand in über ein Zeitfenster steigungsbegrenzter Weise in die den Fahrzustand beschreibende Größe übernommen wird. Dies kann so erfolgen, dass zu jedem Zeitpunkt t entsprechend dem Zyklus (zum Beispiel alle 200 ms) die Größe des Fahrzustandes des vorangehenden Zyklus um 1 erhöht wird und in die Größe des Fahrzustands übernommen wird, falls die aktuelle Größe des Fahrzustands größer ist als die Größe des Fahrzustands im letzten Zyklus.

Die Erfindung baut auf dem gattungsgemäßen Verfahren dadurch auf, dass ein aus dem Lenkwinkelsignal abgeleitetes Signal mit einem maximalen Lenkwinkelsignal verglichen wird, dass ein aus dem Querbeschleunigungssignal abgeleitetes Signal mit einem maximalen Querbeschleunigungssignal verglichen wird und dass aus den Vergleichen eine den Fahrzustand des Fahrzeugs beschreibende Größe abgeleitet wird. Auf diese Weise ist es möglich, den Fahrzustand über eine variable Schwelle zu überwachen. Es ist möglich, die Fehlerschwelle umso höher zu legen, je dynamischer gefahren wird. Man vermeidet daher bei dynamischer Fahrweise einen Eingriff in die Fahrdynamik. Andererseits kann eine kritische Schwelle zur Verfügung gestellt werden, um bei kritischen Situationen zuverlässig eine Fahrdynamikregelung vorzunehmen.

Es ist vorgesehen, dass das Lenkwinkelsignal und das Querbeschleunigungssignal jeweils einem Tiefpassfilter zugeführt werden, wobei von den Tiefpassfiltern ein gefiltertes Lenkwinkelsignal und ein gefiltertes Querbeschleunigungssignal ausgegeben werden, dass der Betrag der Differenz zwischen dem Lenkwinkelsignal und dem gefilterten Lenkwinkelsignal gebildet wird, dass der Betrag der Differenz zwischen dem Querbeschleunigungssignal und dem gefilterten Querbeschleunigungssignal gebildet wird, und dass aus den Beträgen eine den Fahrzustand des Fahrzeugs beschreibende Größe abgeleitet wird. Die genannten Differenzsignale zwischen den Rohsignalen und den tiefpassgefilterten Signalen eignen sich besonders für eine sensible Überwachung des Fahrzustands des Fahrzeugs.

Ferner ist es vorteilhaft, dass der Betrag aus der Differenz zwischen dem Lenkwinkelsignal und dem gefilterten Lenkwinkelsignal auf das maximale Lenkwinkelsignal normiert wird, dass der Betrag aus der Differenz zwischen dem Querbeschleunigungssignal und dem gefilterten Querbeschleunigungssignal auf das maximale Querbeschleunigungssignal normiert wird und dass aus den normierten Beträgen eine den Fahrzustand des Fahrzeugs beschreibende Größe abgeleitet wird. Diese normierten Beträge können zwischen 0 und 100% liegen, wobei vorzugsweise 0% einem stationären Fahrzustand entspricht und 100% einem instationären Fahrzustand. Die normierten Größen können dann weitergehend zur Bestimmung der den Fahrzustand des Fahrzeugs beschreibenden Größe verarbeitet werden.

Das Verfahren ist insbesondere dadurch vorteilhaft, dass aus dem Maximum der normierten Beträge eine den Fahrzustand des Fahrzeugs beschreibende Größe abgeleitet wird. Somit werden sowohl das Verhalten des Lenkwinkels als auch das Verhalten der Querbeschleunigung berücksichtigt.

Es ist vorteilhaft, dass der Betrag aus der Differenz zwischen dem Lenkwinkelsignal und dem gefilterten Lenkwinkelsignal mit dem maximalen Lenkwinkelsignal verglichen wird, dass dem normierten Betrag aus der Differenz zwischen dem Lenkwinkelsignal und dem gefilterten Lenkwinkelsignal ein Wert von 100% zugewiesen wird, wenn der Betrag aus der Differenz zwischen dem Lenkwinkelsignal und dem gefilterten Lenkwinkelsignal größer oder gleich dem maximalen Lenkwinkelsignal ist. Insofern kann eine Größe zur Verfügung gestellt werden, welche für sämtliche Fahrsituationen zwischen 0% und 100% liegt, wobei 100% alle Fahrzustände erfasst, die mit einem Lenkwinkelsignal oberhalb des maximalen Lenkwinkelsignals einhergehen.

In ähnlicher Weise ist das Verfahren dadurch vorteilhaft, dass der Betrag aus der Differenz zwischen dem Querbeschleunigungssignal und dem gefilterten Querbeschleunigungssignal mit dem maximalen Querbeschleunigungssignal verglichen wird und dass dem normierten Betrag aus der Differenz zwischen dem Querbeschleunigungssignal und dem gefilterten Querbeschleunigungssignal ein Wert von 100% zugewiesen wird, wenn der Betrag aus der Differenz zwischen dem Querbeschleunigungssignal und dem gefilterten Querbeschleunigungssignal größer oder gleich dem maximalen Querbeschleunigungssignal ist. Damit bestehen im Hinblick auf den Wertebereich des Querbeschleunigungssignals vergleichbare Verhältnisse wie beim Wertebereich des Lenkwinkelsignals. Die beiden normierten Signale haben als minimalen Wert 0%, wobei dieser Wert bei einem digitalen Wertebereich zwischen 0 und 255 dann zugewiesen wird, wenn der Betrag aus den jeweiligen Differenzen kleiner 2 Bit ist.

Das Verfahren ist besonders vorteilhaft dadurch weitergebildet, dass eine Veränderung des Fahrzustands zu instationärem Fahrzustand direkt in die den Fahrzustand beschreibende Größe übernommen wird. Ist in einem aktuellen Abfragezyklus die Größe, welche dem Fahrzustand entspricht, kleiner als die Größe des Fahrzustands im vorangehenden Zyklus, so wird als Größe für den Fahrzustand die Größe des aktuellen Fahrzustands übernommen.

In diesem Zusammenhang ist es ebenfalls vorteilhaft, dass eine Veränderung des Fahrzustandes zu stationärem Fahrzustand in über ein Zeitfenster steigungsbegrenzter Weise in die den Fahrzustand beschreibende Größe übernommen wird. Dies kann so erfolgen, dass zu jedem Zeitpunkt t entsprechend dem Zyklus (zum Beispiel alle 200 ms) die Größe des Fahrzustandes des vorangehenden Zyklus um 1 erhöht wird und in die Größe des Fahrzustands übernommen wird, falls die aktuelle Größe des Fahrzustands größer ist als die Größe des Fahrzustands im letzten Zyklus.

Der Erfindung liegt die Erkenntnis zugrunde, dass eine Bestimmung des Fahrzustandes möglich ist, wobei die Abschaltschwellen der Drehratenüberwachung dem jeweiligen Fahrzustand entsprechend angepasst werden können. Es werden so engere und variable Überwachungsschwellen ermöglicht, wobei dies bei der Gradientenüberwachung des Drehratensignals, bei der BITE-Überwachung des Drehratensignals und bei der Bereichsüberwachung auf physikalisch plausible Werte des Drehratensignals vorteilhaft einsetzbar ist. Es ist möglich, die Fehlerschwelle umso höher zu legen, je dynamischer gefahren wird. Die "normierte Abweichung" wird als Maß für die Dynamik der Fahrweise verwendet. Es ist somit möglich, eine zuverlässigere Unterscheidung zwischen kritischen Situationen und gewollten Veränderungen des Fahrverhaltens zur Verfügung zu stellen.

## Zeichnungen

Die Erfindung wird nun mit Bezug auf die begleitende Zeichnung anhand einer bevorzugten Ausführungsform beispielhaft erläutert.
Dabei zeigt:

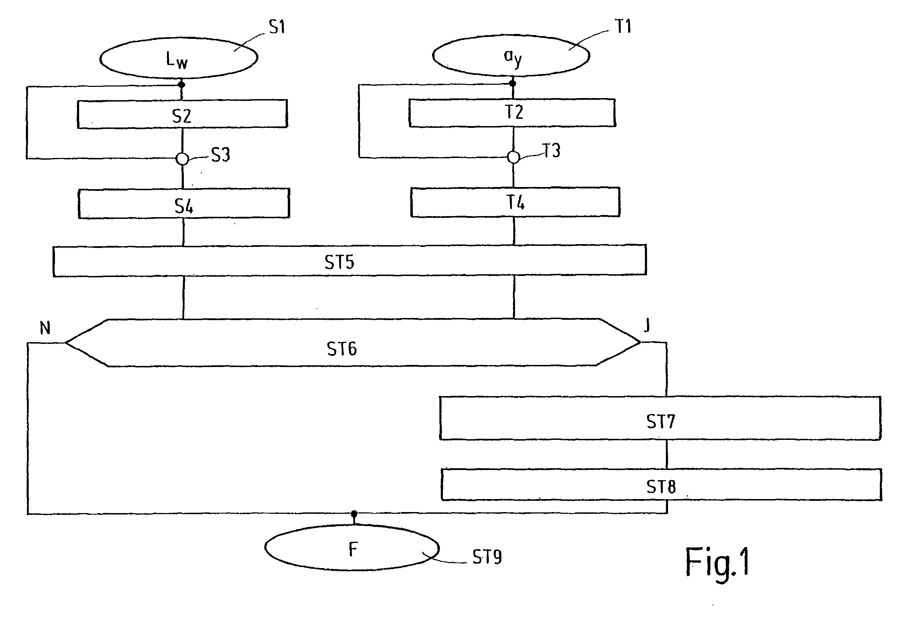

Figur 1    ein Flussdiagramm zur Erläuterung der vorliegenden Erfindung.

## Beschreibung des Ausführungsbeispiels

Figur 1 zeigt ein Flussdiagramm zur Erläuterung der Erfindung. Die in dem Flussdiagramm angegebenen Schrittsymbole haben die folgende Bedeutung:

S1 :    Erzeugen eines Lenkwinkelsignals
T1 :    Erzeugen eines Querbeschleunigungssignals
S2 :    Tiefpassfilterung
T2 :    Tiefpassfilterung
S3 :    Differenzbildung
T3 :    Differenzbildung
S4 :    Betragsbildung
T4 :    Betragsbildung
ST5:    Faktor Fahrzustand mit "instationär" belegen; Fahrzustand := 0
ST6:    Betragdifferenz Lenkwinkwinkelsignal < maximales Lenkwinkelsignal UND Betragdifferenz Querbeschleunigungssignal < maximales Querbeschleunigungssignal ?
ST7:    Normieren Betragdifferenz Lenkwinkelsignal auf maximale Differenz Lenkwinkelsignal; Normieren Betrag Querbeschleunigungssignal auf maximale Differenz Querbeschleunigungssignal; Bestimmen des Maximums der normierten Werte
ST8:    Faktor für Fahrzustand berechnen
ST9:    Größe F für Fahrzustand ausgeben

Bei dem erfindungsgemäßen Verfahren werden das Lenkwinkelsignal $L_w$ aus Schritt S1 und das Querbeschleunigungssignal $a_y$ aus Schritt T1 zunächst jeweils einem Tiefpaßfilter S2 beziehungsweise T2 zugeführt. Anschließend wird in Schritt S3 die Differenz aus dem Roh-Lenkwinkelsignal und dem tiefpassgefilterten Lenkwinkelsignal gebildet. In vergleichbarer Weise wird in Schritt T3 die Differenz aus dem Roh-Querbeschleunigungssignal und dem tiefpassgefilterten Querbeschleunigungssignal gebildet. In Schritt S4 wird der Betrag der in Schritt S3 erzeugten Differenz gebildet. In Schritt T4 wird der Betrag der in Schritt T3 gebildeten Differenz gebildet.

In einem nachfolgenden Schritt ST5 wird die Größe für den Fahrzustand initialisiert, das heißt, dem Fahrzustand wird der Wert 0 zugewiesen, welcher für "instationär" steht. Die in Schritt S4 beziehungsweise in Schritt T4 erzeugten Beträge werden in Schritt ST6 mit Maximalbeträgen verglichen. Ist der Betrag der Differenz der Lenkwinkelsignale kleiner als ein Maximalwert und ist ferner der Betrag der Querbeschleunigungssignale kleiner als ein weiterer Maximalwert, so wird zu Schritt ST7 übergegangen.

In Schritt ST7 werden einerseits die Beträge der Differenzwerte auf die jeweiligen Maximalwerte normiert. Ferner wird das Maximum dieser beiden normierten Beträge bestimmt. Aus dieser Größe wird dann in Schritt ST8 die Größe F für den Fahrzustand berechnet, welche in Schritt ST9 ausgegeben wird.

Ergibt sich in Schritt ST6, dass die Beträge der Differenzen größer oder gleich den jeweiligen Maximalbeträgen sind, so wird der Größe für den Fahrzustand in jedem Fall der Wert 0 zugewiesen, das heißt, der Wert aus Schritt ST5, welcher für "instationären" Fahrzustand steht.

Aus Robustheitsgründen kann die Größe für den Fahrzustand noch dahingehend gefiltert werden, dass instationäre Werte sofort übernommen werden, stationäre Werte jedoch über ein Zeitfenster steigungsbegrenzt werden. Bezeichnet man die Größe für den Fahrzustand im aktuellen Zyklus mit $F_{neu}$ und die Größe für den Fahrzustand für den vorangehenden Zyklus $F_{alt}$, so erfolgt die Zuweisung der Größe für den Fahrzustand in jedem 20 ms Zyklus in der Weise, dass gilt:

$$F = F_{neu}, \text{ wenn } F_{neu} < F_{alt}$$

das heißt $F_{neu}$ "instationärer" als $F_{alt}$.

Beziehungsweise:

$$F = F_{alt} + 1, \text{ wenn } F_{neu} > F_{alt}$$

das heißt $F_{neu}$ "stationärer" als $F_{alt}$.

Dies kann dann beispielsweise je nach der eingestellten Zykluszeit alle 200 ms erfolgen.

**Patentansprüche**

1. Anordnung zum Überwachen des Fahrzustands eines Fahrzeugs mit

   - Mitteln zum Erzeugen eines Lenkwinkelsignals ($L_w$) und

   - Mitteln zum Erzeugen eines Querbeschleunigungssignals ($a_y$),

   - Mitteln zum Vergleichen eines aus dem Lenkwinkelsignal ($L_w$) abgeleiteten Signals mit einem maximalen Lenkwinkelsignal,

   - Mitteln zum Vergleichen eines aus dem Querbeschleunigungssignal ($a_y$) abgeleiteten Signals mit einem maximalen Querbeschleunigungssignal,

   **dadurch gekennzeichnet, dass** Tiefpassfilter vorgesehen sind, denen

   - das Lenkwinkelsignal und das Querbeschleunigungssignal jeweils zugeführt werden, wobei von den Tiefpassfiltern ein gefiltertes Lenkwinkelsignal und ein gefiltertes Querbescheunigungssignal ausgegeben werden,

   - dass Mittel zum Bilden des Betrags der Differenz zwischen dem Lenkwinkelsignal und dem gefilterten Lenkwinkelsignal vorgesehen sind,

   - dass Mittel zum Bilden des Betrags der Differenz zwischen dem Querbeschleunigungssignal und dem gefilterten Querbeschleunigungssignal vorgesehen sind und

   - dass Mittel vorgesehen sind, die aus den Beträgen und dem Vergleichen eine den Fahrzustand des Fahrzeugs beschreibende Größe ableiten.

2. Anordnung nach Anspruch 1, **dadurch gekennzeichnet,**

   - **dass** der Betrag aus der Differenz zwischen dem Lenkwinkelsignal und dem gefilterten Lenkwinkelsignal auf das maximale Lenkwinkelsignal normiert wird,

   - **dass** der Betrag aus der Differenz zwischen dem Querbeschleunigungssignal und dem gefilterten Querbeschleunigungssignal auf das maximale Querbeschleunigungssignal normiert wird und

   - **dass** aus den normierten Beträgen eine den Fahrzustand des Fahrzeugs beschreibende Größe ableitbar ist.

3. Anordnung nach einem der vorangehenden Ansprüche, **dadurch gekennzeichnet, dass** aus dem Maximum der normierten Beträge eine den Fahrzustand des Fahrzeugs beschreibende Größe leitbar ist.

4. Anordnung nach einem der vorangehenden Ansprüche, **dadurch gekennzeichnet,**

- **dass** der Betrag aus der Differenz zwischen dem Lenkwinkelsignal und dem gefilterten Lenkwinkelsignal mit dem maximalen Lenkwinkelsignal verglichen wird und

- **dass** dem normierten Betrag aus der Differenz zwischen dem Lenkwinkelsignal und dem gefilterten Lenkwinkelsignal ein Wert von 100% zugewiesen wird, wenn der Betrag aus der Differenz zwischen dem Lenkwinkelsignal und dem gefilterten Lenkwinkelsignal größer oder gleich dem maximalen Lenkwinkelsignal ist.

5.  Anordnung nach einem der vorangehenden Ansprüche, **dadurch gekennzeichnet,**

- **dass** der Betrag aus der Differenz zwischen dem Querbeschleunigungssignal und dem gefilterten Querbeschleunigungssignal mit dem maximalen Querbeschleunigungssignal verglichen wird und
- **dass** dem normierten Betrag aus der Differenz zwischen dem Querbeschleunigungssignal und dem gefilterten Querbeschleunigungssignal ein Wert von 100% zugewiesen wird, wenn der Betrag aus der Differenz zwischen dem Querbeschleunigungssignal und dem gefilterten Querbeschleunigungssignal größer oder gleich dem maximalen Querbeschleunigungssignal ist.

6.  Anordnung nach einem der vorangehenden Ansprüche, **dadurch gekennzeichnet, dass** eine Veränderung des Fahrzustands zu instationärem Fahrzustand direkt in die den Fahrzustand beschreibende Größe übernommen wird.

7.  Anordnung nach einem der vorangehenden Ansprüche, **dadurch gekennzeichnet, dass** eine Veränderung des Fahrzustands zu stationärem Fahrzustand in über ein Zeitfenster steigungsbegrenzter Weise in die den Fahrzustand beschreibende Größe übernommen wird.

8.  Verfahren zum Überwachen des Fahrzustands eines Fahrzeugs mit den Schritten:

- Erzeugen eines Lenkwinkelsignals ($L_w$) (S1),

- Erzeugen eines Querbeschleunigungssignals ($a_y$) (T1),

- Vergleichen eines aus dem Lenkwinkelsignal ($L_w$) abgeleiteten Signals mit einem maximalen Lenkwinkelsignal (ST6),

- Vergleichen eines aus dem Querbeschleunigungssignal ($a_y$) abgeleiteten Signals mit einem maximalen Querbeschleunigungssignal (ST6),

**dadurch gekennzeichnet,**

- **dass** das Lenkwinkelsignal und das Querbeschleunigungssignal jeweils einem Tiefpassfilter zugeführt werden, wobei von den Tiefpassfiltern ein gefiltertes Lenkwinkelsignal und ein gefiltertes Querbeschleunigungssignal ausgegeben werden (S2, T2),

- **dass** der Betrag der Differenz zwischen dem Lenkwinkelsignal und dem gefilterten Lenkwinkelsignal gebildet wird (S3),

- **dass** der Betrag der Differenz zwischen dem Querbeschleunigungssignal und dem gefilterten Querbeschleunigungssignal gebildet wird (T3) und

- **dass** aus den Beträgen und dem Vergleichen eine den Fahrzustand des Fahrzeugs beschreibende Größe abgeleitet wird (ST8).

9.  Verfahren nach Anspruch 8, **dadurch gekennzeichnet,**

- **dass** der Betrag aus der Differenz zwischen dem Lenkwinkelsignal und dem gefilterten Lenkwinkelsignal auf das maximale Lenkwinkelsignal normiert wird (ST7),

- **dass** der Betrag aus der Differenz zwischen dem Querbeschleuni-gungssignal und dem gefilterten Querbeschleunigungssignal auf das maximale Querbeschleunigungssignal normiert wird (ST7) und

- **dass** aus den normierten Beträgen eine den Fahrzustand des Fahrzeugs beschreibende Größe abgeleitet wird (ST8).

10. Verfahren nach einem der Ansprüche 8 bis 9, **dadurch gekennzeichnet, dass** aus dem Maximum der normierten Beträge (ST7) eine den Fahrzustand des Fahrzeugs beschreibende Größe abgeleitet wird.

11. Verfahren nach einem der Ansprüche 8 bis 10, **dadurch gekennzeichnet,**

- **dass** der Betrag aus der Differenz zwischen dem Lenkwinkelsignal und dem gefilterten Lenkwinkelsignal mit dem maximalen Lenkwinkelsignal verglichen wird (ST6),
- **dass** dem normierten Betrag aus der Differenz zwischen dem Lenkwinkelsignal und dem gefilterten Lenkwinkelsignal ein Wert von 100% zugewiesen wird, wenn der Betrag aus der Differenz zwischen dem Lenkwinkelsignal und dem gefilterten Lenkwinkelsignal größer oder gleich dem maximalen Lenkwinkelsignal ist.

12. Verfahren nach einem der Ansprüche 8 bis 11, **dadurch gekennzeichnet,**

- **dass** der Betrag aus der Differenz zwischen dem Querbeschleunigungssignal und dem gefilterten Querbeschleunigungssignal mit dem maximalen Querbeschleunigungssignal verglichen wird (ST6),

- **dass** dem normierten Betrag aus der Differenz zwischen dem Querbeschleunigungssignal und dem gefilterte Querbeschleunigungssignal ein Wert von 100% zugewiesen wird, wenn der Betrag aus der Differenz zwischen dem Querbeschleunigungssignal und dem gefilterten Querbeschleunigungssignal größer oder gleich dem maximalen Querbeschleunigungssignal ist.

13. Verfahren nach einem der Ansprüche 8 bis 12, **dadurch gekennzeichnet, dass** eine Veränderung des Fahrzustands zu instationärem Fahrzustand direkt in die den Fahrzustand beschreibende Größe übernommen wird.

14. Verfahren nach einem der Ansprüche 8 bis 13, **dadurch gekennzeichnet, dass** eine Veränderung des Fahrzustands zu stationärem Fahrzustand in über ein Zeitfenster steigungsbegrenzter begrenzter Weise in die den Fahrzustand beschreibenden Größe übernommen wird.

## Claims

1. Arrangement for monitoring the drive state of a vehicle having the

   - means for generating a steering angle signal ($L_w$) and
   - means for generating a transverse acceleration signal ($a_y$),
   - means for comparing a signal driven from the steering angle signal ($L_w$) with a maximum steering angle signal,
   - means for comparing a signal driven from the transverse acceleration signal ($a_y$) with a maximum transverse acceleration signal,

   **characterized**

   - **in that** low-pass filters are provided to which the steering angle signal and the transverse acceleration signal are respectively fed, wherein a filtered steering angle signal and a filtered transverse acceleration signal are output by the low-pass filters,
   - **in that** means for forming the absolute value of the difference between the steering angle signal and the filtered steering angle signal are provided,
   - **in that** means for forming the absolute value of the difference between the transverse acceleration signal and the filtered transverse acceleration signal are provided, and
   - **in that** means are provided which derive a variable describing the driving state of the vehicle from the absolute values and the comparison.

2. Arrangement according to Claim 1, **characterized**

   - **in that** the absolute value of the difference between the steering angle signal and the filtered steering angle signal is standardized to the maximum steering angle signal,
   - **in that** the absolute value of the difference between the transverse acceleration signal and the filtered transverse acceleration signal is standardized to the maximum transverse acceleration signal, and
   - **in that** a variable describing the driving state of the vehicle can be derived from the standardized absolute values.

3. Arrangement according to one of the preceding claims, **characterized in that** a variable describing the driving state of the vehicle can be derived from the maximum of the standardized absolute values.

4. Arrangement according to one of the preceding claims, **characterized**

   - **in that** the absolute value of the difference between the steering angle signal and the filtered steering angle signal is compared with the maximum steering angle signal, and
   - **in that** the standardized absolute value of the difference between the steering angle signal and the filtered steering angle signal is assigned a value of 100% if the absolute value of the difference between the steering angle signal and the filtered steering angle signal is greater than or equal to the maximum steering angle signal.

5. Arrangement according to one of the preceding claims, **characterized**

   - **in that** the absolute value of the difference between the transverse acceleration signal and the filtered transverse acceleration signal is compared with the maximum transverse acceleration signal, and

- **in that** the standardized absolute value of the difference between the transverse acceleration signal and the filtered transverse acceleration signal is assigned a value of 100% if the absolute value of the difference between the transverse acceleration signal and the filtered transverse acceleration signal is greater than or equal to the maximum transverse acceleration signal.

6. Arrangement according to one of the preceding claims, **characterized in that** a change in the driving state to a non-steady driving state is transferred directly into the variable describing the driving state.

7. Arrangement according to one of the preceding claims, **characterized in that** a change in the driving state to a steady driving state is transferred into the variable describing the driving state with gradient limitation by means of a time window.

8. Method for monitoring the driving state of a vehicle having the steps:

- generation of a steering angle signal ($L_w$) (S1),
- generation of a transverse acceleration signal ($a_y$) (T1),
- comparison of a signal derived from the steering angle signal ($L_w$) with a maximum steering angle signal (ST6),
- comparison of a signal derived from the transverse acceleration signal ($a_y$) with a maximum transverse acceleration signal (ST6),

   **characterized**

- **in that** the steering angle signal and the transverse acceleration signal are each fed to a low-pass filter, wherein a filtered steering angle signal and a filtered transverse acceleration signal are output (S2, T2) by the low-pass filters,
- **in that** the absolute value of the difference between the steering angle signal and the filtered steering angle signal is formed (S3),
- **in that** the absolute value of the difference between the transverse acceleration signal and the filtered transverse acceleration signal is formed (T3), and
- **in that** a variable describing the driving state of the vehicle is derived (ST8) from the absolute values and the comparisons.

9. Method according to Claim 8, **characterized**

- **in that** the absolute value of the difference between the steering angle signal and the filtered steering angle signal is standardized (ST7) to the maximum steering angle signal,

- **in that** the absolute value of the difference between the transverse acceleration signal and the filtered transverse acceleration signal is standardized (ST7) to the maximum transverse acceleration signal, and
- **in that** a variable describing the driving state of the vehicle is derived (ST8) from the standardized absolute values.

10. Method according to one of Claims 8 to 9, **characterized in that** a variable describing the driving state of the vehicle is derived from the maximum of the standardized absolute values (ST7).

11. Method according to one of Claims 8 to 10, **characterized**

- **in that** the absolute value of the difference between the steering angle signal and the filtered steering angle signal is compared (ST6) with the maximum steering angle signal,
- **in that** the standardized absolute value of the difference between the steering angle signal and the filtered steering angle signal is assigned a value of 100% if the absolute value of the difference between the steering angle signal and the filtered steering angle signal is greater than or equal to the maximum steering angle signal.

12. Method according to one of Claims 8 to 11, **characterized**

- **in that** the absolute value of the difference between the transverse acceleration signal and the filtered transverse acceleration signal is compared (ST6) with the maximum transverse acceleration signal,
- **in that** the standardized absolute value of the difference between the transverse acceleration signal and the filtered transverse acceleration signal is assigned a value of 100% if the absolute value of the difference between the transverse acceleration signal and the filtered transverse acceleration signal is greater than or equal to the maximum transverse acceleration signal.

13. Method according to one of Claims 8 to 12, **characterized in that** a change in the driving state to a non-steady driving state is transferred directly into the variable describing the driving state.

14. Method according to one of Claims 8 to 13, **characterized in that** a change in the driving state to a steady driving state is transferred into the variable describing the driving state with gradient limitation by means of a time window.

**Revendications**

1. Dispositif pour surveiller l'état de marche d'un véhicule avec

   - des moyens de production d'un signal d'angle de direction ($L_w$) et
   - des moyens de production d'un signal d'accélération transversale ($a_y$),
   - des moyens de comparaison d'un signal dérivé du signal d'angle de direction ($L_w$) avec un signal d'angle de direction maximum,
   - des moyens de comparaison d'un signal dérivé du signal d'accélération transversale ($a_y$) avec un signal d'accélération transversale maximum,

   **caractérisé par**

   - des filtres passe-bas qui reçoivent le signal d'angle de direction et le signal d'accélération transversale et qui émettent, un signal d'angle de direction et un signal d'accélération transversale filtrés,
   - des moyens de formation du montant de la différence entre le signal d'angle de direction et le signal d'angle de direction filtré,
   - des moyens de formation du montant de la différence entre le signal d'accélération transversale et le signal d'accélération transversale filtré, et
   - des moyens qui à partir des montants et de la comparaison déduisent une grandeur décrivant l'état de marche du véhicule.

2. Dispositif selon la revendication 1, **caractérisé en ce que**

   - le montant issu de la différence entre le signal d'angle de direction et le signal d'angle de direction filtré est normalisé sur le signal d'angle de direction maximum,
   - le montant issu de la différence entre le signal d'accélération transversale et le signal d'accélération transversale filtré est normalisé sur le signal d'accélération transversale maximum et
   - une grandeur décrivant l'état de marche du véhicule peut être dérivée des montants normalisés.

3. Dispositif selon l'une quelconque des revendications précédentes, **caractérisé en ce qu'**
   une grandeur décrivant l'état de marche du véhicule peut être dérivée du maximum des montants normalisés.

4. Dispositif selon l'une quelconque des revendications précédentes, **caractérisé en ce que**

   - le montant issu de la différence entre le signal d'angle de direction et le signal d'angle de direction filtré est comparé avec le signal d'angle de direction maximum et
   - une valeur de 100 % est attribuée au montant normalisé issu de la différence entre le signal d'angle de direction et le signal d'angle de direction filtré, si le montant issu de la différence entre le signal d'angle de direction et le signal d'angle de direction filtré est supérieur ou égal au signal d'angle de direction maximum.

5. Dispositif selon l'une quelconque des revendications précédentes, **caractérisé en ce que**

   - le montant issu de la différence entre le signal d'accélération transversale et le signal d'accélération transversale filtré est comparé avec le signal d'accélération transversale maximum et
   - une valeur de 100 % est attribuée au montant normalisé issu de la différence entre le signal d'accélération transversale et le signal d'accélération transversale filtré, si le montant issu de la différence entre le signal d'accélération transversale et le signal d'accélération transversale filtré est supérieur ou égal au signal d'accélération transversale maximum.

6. Dispositif selon l'une quelconque des revendications précédentes, **caractérisé en ce qu'**
   une modification de l'état de marche pour un état de marche non stationnaire est directement prise en charge dans la grandeur décrivant l'état de marche.

7. Dispositif selon l'une quelconque des revendications précédentes, **caractérisé en ce qu'**
   une modification de l'état de marche pour un état de marche stationnaire, comme en faible montée sur un certain intervalle de temps, est prise en charge dans la grandeur décrivant l'état de marche.

8. Procédé pour surveiller l'état de marche d'un véhicule par les étapes consistant à :

   - produire un signal d'angle de direction ($L_w$) (S1),

- produire un signal d'accélération transversale ($a_y$) (T1),
- comparer un signal dérivé d'un signal d'angle de direction ($L_w$) avec un signal d'angle de direction maximum (ST6),
- comparer un signal dérivé du signal d'accélération transversale ($a_y$) avec un signal d'accélération transversale maximum (ST6),

**caractérisé en ce que**

- le signal d'angle de direction et le signal d'accélération transversale sont amenés chacun à un filtre passe-bas, un signal d'angle de direction et un signal d'accélération transversale filtrés étant émis (S2, T2) depuis les filtres passe-bas,
- on forme (S3) le montant de la différence entre le signal d'angle de direction et le signal d'angle de direction filtré,
- le montant de la différence entre le signal d'accélération transversale et le signal d'accélération transversale filtré est formé (T3),
- une grandeur décrivant l'état de marche du véhicule est dérivée des montants et de la comparaison (ST8).

9. Procédé selon la revendication 8,
**caractérisé en ce que**

- le montant issu de la différence entre le signal d'angle de direction et le signal d'angle de direction filtré est normalisé sur le signal d'angle de direction maximum (ST7),
- le montant issu de la différence entre le signal d'accélération transversale et le signal d'accélération transversale filtré est normalisé sur le signal d'accélération transversale maximum (ST7),
- une grandeur décrivant l'état de marche du véhicule est déduite des montants normalisés (ST8).

10. Procédé selon l'une quelconque des revendications 8 à 9,
**caractérisé en ce qu'**
une grandeur décrivant l'état de marche du véhicule est déduite du maximum des montants normalisés (ST7).

11. Procédé selon l'une quelconque des revendications 8 à 10, **caractérisé en ce que**

- le montant issu de la différence entre le signal d'angle de direction et le signal d'angle de direction filtré est comparé avec le signal d'angle de direction maximum (ST6),
- une valeur de 100 % est attribuée au montant normalisé issu de la différence entre le signal d'angle de direction et le signal d'angle de direction filtré, si le montant issu de la différence entre le signal d'angle de direction et le signal d'angle de direction filtré est supérieur ou égal au signal d'angle de direction maximum.

12. Procédé selon l'une quelconque des revendications 8 à 11,
**caractérisé en ce que**

- le montant issu de la différence entre le signal d'accélération transversale et le signal d'accélération transversale filtré est comparé avec le signal d'accélération transversale maximum (ST6),
- une valeur de 100 % est attribuée au montant normalisé issu de la différence entre le signal d'accélération transversale et le signal d'accélération transversale filtré, si le montant issu de la différence entre le signal d'accélération transversale et le signal d'accélération transversale filtré est supérieur ou égal au signal d'accélération transversale maximum.

13. Procédé selon l'une quelconque des revendications 8 à 12,
**caractérisé en ce qu'**
une modification de l'état de marche pour un état de marche non stationnaire est directement prise en charge dans la grandeur décrivant l'état de marche.

14. Procédé selon l'une quelconque des revendications 8 à 13,
**caractérisé en ce qu'**
une modification de l'état de marche pour un état de marche stationnaire, comme en faible montée sur un certain intervalle de temps, est prise en charge dans la grandeur décrivant l'état de marche.

Fig.1